# EUROPEAN PATENT APPLICATION

(11) **EP 2 769 625 A1**
(43) Date of publication of application: **27.08.2014**
(21) Application number: 13000928.5
(22) Date of filing: 25.02.2013
(51) Int. Cl.: A23G 1/40, A23L 1/308, A23G 3/38, A23G 3/42

(54) **Confectionery compositions**

(71) Applicant: Cargill, Incorporated, Wayzata, MN 55391 (US)
(72) Inventor: The designation of the inventor has not yet been filed
(74) Representative: Elseviers, Myriam

(57) **Abstract**

The present invention relates to an edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100, a carbohydrate based polyol, and/or non-caloric high-intensity sweetener. It also discloses a confectionery product comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100. It further comprises a carbohydrate based polyol, and/or non-caloric high intensity sweetener.

## Description

### Field of the Invention

The present invention relates to a confectionery product containing arabinoxylan-oligosaccharides and optionally xylo-oligosaccharides as fiber material.

### Background of the Invention

An increasing preoccupation of consumers with nutrition and with the potential beneficial effects of foods is nowadays observed and this also has an impact on the perception of confectionery products.

Sugar-free confectionery products require successfully manufacturing and obtaining products that are in quality such as texture and mouthfeel quite similar to the traditional products. Various studies have been provided and active research has been reported in this field. However, there is still a further need of providing fiber containing materials into confectionery products. The current invention provides such a carbohydrate mixture.

### Summary of the Invention

The current invention relates to an edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100, a carbohydrate based polyol, and/or non-caloric high-intensity sweetener.

The current invention relates to a confectionery product comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100.

It further relates to the use of confectionery product of current invention for promoting for promoting gut microbiota and/or for promoting the growth of lactic acid bacteria.

### Detailed Description

The current invention relates to an edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100, a carbohydrate based polyol, and/or non-caloric high-intensity sweetener

### Dietary fiber

Dietary fiber (fiber in the current invention) refers to indigestible carbohydrate based material. It encompasses carbohydrate polymers which are not hydrolyzed by the endogenous enzymes in the human small intestine. It may encompass two types of fibers. Either the fiber is soluble in water or it refers to a fiber which is not soluble in water. Soluble fibers in the sense of the current invention are understood those, which form a homogeneous solution in water, in a concentration of at least 1 g/L at room temperature.

Many of the physiological effects associated with dietary fiber consumption, including effects on stool parameters, colonic health, mineral absorption in the colon, vitamin synthesis in the colon, the metabolic syndrome and immune system, are believed to promote health and wellbeing of the consumer. Dietary fibers have a strong impact on the colonic ecosystem and serve as primary substrates for intestinal microbiota metabolism.

### AXOS

Preparations consisting predominantly of arabinoxylan-oligosaccharides and minor amounts of xylo-oligosaccharides (hereinafter abbreviated as AXOS), in the context of the present invention, refer to poly- or oligosaccharides comprising a backbone of beta-(1-4)-linked D-xylopyranosyl residues (xylose) with a degree of polymerisation of the backbone from 2 and 100, preferably from 2 to 50, 3 to 30, 3 to 20, 5 to 10, with no (in the case of xylo-oligosaccharides) or at least one alpha-L-arabinofuranosyl (arabinose) residue linked to one of the xylose residues of the backbone per molecule. Other substituents such as acetyl, alfa-glucuronyl, alfa-4-O-methylglucuronyl, galacturonyl, xylosyl, rhamnosyl, galactosyl, or glucosyl side chains, or short oligosaccharide side chains, can be attached to one or more of the xylose residues and hydroxycinnamic acids, such as ferulic acid, dehydrodiferulic acid, p-coumaric acid, caffeic acid or sinapic acid, can be linked to one or more of the arabinose units. AXOS can be derived from arabinoxylans by partial hydrolysis, e.g. using acids or arabinoxylan degrading enzymes and/or physical treatment. Without being limited, a suitable preparation of AXOS is for example provided in EP 1 418 819 or EP 1 758 470.

It is further to be noted that AXOS in the present invention also covers the preparations that are not 100% pure and are further containing ashes, proteins and other carbohydrates. It goes without saying that the current invention also covers the AXOS enriched preparations whereby AXOS can be added in liquid or powder form.

### Carbohydrate based polyol

The carbohydrate based polyol can be selected from tetritols, pentitols, hexitols, and higher polyols. The polyol may include but is not limited to erythritol, xylitol, arabinitol, sorbitol, mannitol, iditol, galactitol, maltitol, isomaltitol, isomalt, lactitol, mixtures of two or more thereof, and the like. Preferably the polyol is erythritol, mannitol, isomalt, maltitol or a mixture of two or more thereof.

### Non-caloric high intensity sweetener

A non-caloric high intensity sweetener, which can be used as non-nutritive sweetener can be selected from the group consisting of aspartame, acesulfame salts such as acesulfame-K, saccharins (e.g. sodium and calcium salts), cyclamates (e.g. sodium and calcium salts), sucralose, alitame, neotame, steviosides, glycyrrhizin, neohesperidin, thaumatin, brazzein and mixtures of two or more thereof, preferably stevioside.

### Polydextrose

Polydextrose is well-known in the art and it is a water-soluble, low caloric, non-cariogenic bulking agent. It is a randomly cross-linked (branched) glucan polymer (polysaccharide complex) characterised by having predominantly β-1-6 and β-1-4 linkages and which is produced through acid-catalysed condensation of saccharides alone or in the presence of sugar alcohols. Polydextrose can be applied in its powder and/or liquid form.

### Confectionery product

Confectionery products within the scope of the present invention include chocolate composition, crystalline and non-crystalline products. Non-crystalline products within the scope of the present invention include hard candies, chewy candy, brittle, caramel, toffee, licorice, jellies, chewing gums, gums. Crystalline products within the contemplation of the confectionery composition of the present invention encompass fondants and creams, fudge, nougats, marshmallows, pralines, pressed candies, e.g; tablets, marzipan and pastes and panned candies (dragees). Combinations of these products are also within the scope of confectionery compositions. For example, chocolate-coated crystalline or non-crystalline products.

### Chocolate composition

Chocolate composition, an important confectionery product within the contemplation of the present invention, encompasses chocolate drinks, sweet chocolate, semi-sweet chocolate, bitter-sweet chocolate, which as a group are often referred to as dark chocolate, milk chocolate, buttermilk chocolate, skim milk chocolate and white chocolate, . In addition, any of the aforementioned chocolates filled with nuts, fruits, rice and other fillings used in the chocolate arts are also within the scope of the current invention. Chocolate also includes any confectionery product having qualities sufficient to impart chocolate taste, chocolate flavor and any other material that performs as a chocolate analogue or a chocolate substitute, a chocolate-like (e.g. comprising cocoa butter replacers, or cocoa-butter equivalents).

The terms "chocolate" and "chocolate composition" can be used interchangeably. They typically refer to mixtures of cocoa liquor and/or cocoa powder, cocoa butter and/or cocoa butter replacers, equivalents, improvers, and/or substitutes, sugar and/or sugar replacers plus one or more optional ingredients such as emulsifiers, milk solids, milk fats, nuts, nut pastes and flavouring agents. They should not be interpreted as being limited to any particular legal definition of chocolate under certain national regulations.

The resulting chocolate composition can either be stored or used directly, e.g. for the manufacture of tablets or bars or to produce, by way of illustration only, an aerated product, coatings, moulded chocolates, chocolate centres, pralines, chocolate shapes, chocolate chips, chocolate fillings and chocolate for fondue. It may also be inclusions, chocolate layers, chocolate nuggets, chocolate pieces, chocolate drops, or shaped chocolates, such as in the form of letters of the alphabet and numbers, dinosaurs, cars and the like. It may further contain crispy inclusions e.g. cereals, like expanded or toasted rice or dried fruit pieces which are preferably coated in moisture barriers to delay the absorption of moisture from the product.

Furthermore, the current invention also relates to a chocolate drink wherein the cocoa powder and/or powder of cocoa replacers is enriched with AXOS.

Furthermore, the current invention relates to the edible composition of the current invention wherein the fiber containing material, being AXOS, is present in an amount of from 2 to 99.5% based on dry matter content of the edible composition. It further relates to the edible composition of the current invention wherein the fiber containing material is present in an amount of from 5 to 90% based on dry matter content of the composition. It further relates to the edible composition of the current invention wherein the fiber containing material is present in an amount of from 10 to 80% based on dry matter content of the composition. It further relates to the composition of the current invention wherein the fiber containing material is present in an amount of from 20 to 75% based on dry matter content of the edible composition. It further relates to the edible composition of the current invention wherein the fiber containing material is present in an amount of from 25 to 70% based on dry matter content of the edible composition. It further relates to the edible composition of the current invention wherein the fiber containing material is present in an amount of from 30 to 60% based on dry matter content of the edible composition. It further relates to the edible composition of the current invention wherein the fiber containing material is present in an amount of from 40% to 50% based on dry matter content of the edible composition.

The current invention relates to the edible composition of the current invention wherein the polyol may be present in an amount of 10%, 20%, 25%, 30%, 40%, 50%, 60%, 70%, 75%, 80% or 90% based upon the dry matter content of the edible composition.

The current invention further relates to the edible composition of the current invention wherein the non-caloric high-intensity sweetener is present in an amount of 0.01% up to 3% based upon the dry matter content of the edible composition.

The current invention further relates to the confectionery product of the current invention wherein the fiber containing material, being AXOS, is present in an amount of from 2 to 99.5% based on dry matter content of the confectionery product. It further relates to the confectionery product of the current invention wherein the fiber containing material is present in an amount of from 5 to 90% based on dry matter content of the confectionery product. It further relates to the confectionery product of the current invention wherein the fiber containing material is present in an amount of from 10 to 80% based on dry matter content of the confectionery product. It further relates to the confectionery product of the current invention wherein the fiber containing material is present in an amount of from 20 to 75% based on dry matter content of the confectionery product. It further relates to the confectionery product of the current invention wherein the fiber containing material is present in an amount of from 25 to 70% based on dry matter content of the confectionery product. It further relates to the confectionery product of the current invention wherein the fiber containing material is present in an amount of from 30 to 60% based on dry matter content of the confectionery product. It further relates to the confectionery product of the current invention wherein the fiber containing material is present in an amount of from 40 to 50% based on dry matter content of the confectionery product.

The current invention further relates to a confectionery product which is containing the edible composition of the current invention in an amount of 1 to 99% based on dry matter of the confectionery product. Preferably, the confectionery product is comprising the edible composition of the current invention in an amount of 5 to 90%, 10 to 80%, 20 to 75%, preferably more than 50% based upon dry matter of the confectionery product.

Surprisingly it is found that by applying AXOS in confectionery product, the manufacture of the confectionery product is working well while the final product is containing a suitable amount of fiber to promote the health and wellbeing of the consumer.

The advantages of the current invention are demonstrated when the confectionery product is containing the arabinoxylan-oligosaccharides having an average degree of polymerisation of at least 2 to 100 and optionally xylo-oligosaccharides having an average degree of polymerisation of at least 2 to 100, preferably when the confectionery product is containing the arabinoxylan-oligosaccharides and optionally xylo-oligosaccharides, having a degree of polymerisation of from 2 to 50.

The health benefits can be explicitly exhibited when the daily intake of the carbohydrate mixture of the current invention is at least amounting in total to 1. g, preferably 1.5 g, preferably to at least 2.5 g, or 3 g, preferably at least 4 g, in and it may be divided over one or more servings. It may even go up to a daily intake of 10 g divided over one or more servings.

It further may depend upon properties of the AXOS (such as degree of polymerisation and/or degree of substitution) and/or on characteristics of the subject, and/or person related characteristics such as age and body weight.

The confectionery product further may comprise other carbohydrates, proteins, peptides, amino acids, antioxidants, fats, vitamins, trace elements, electrolytes, flavours, supplements, and/or mixtures thereof. These other carbohydrates are selected from the group consisting of monosaccharides, disaccharides, gelling starches, starch hydrolysates, viscous fiber containing materials, any other hydrocolloid material (for example xanthan gum, carrageenan, pectin and the like), cellulosic materials, hemicellulosic materials, polyols and mixtures of two or more thereof.

The monosaccharides include tetroses, pentoses, hexoses and ketohexoses. Starch hydrolysates are produced by the controlled acid or enzymatic hydrolysis of starch and can be subdivided into two specific categories, maltodextrins and glucose syrups and are characterized by DE number (dextrose equivalent). In fact, DE number is a measurement of the percentage of reducing sugars present in the syrup and calculated as dextrose on a dry weight basis. Maltodextrins have a DE number up to 20 whereas glucose syrups have an DE number greater than 20. Gelly starches may include emulsified starches such as starch n-octenyl succinate.

Among the major physiological electrolytes are sodium, potassium, chloride, calcium, and magnesium. Further trace elements can be included such as chromium, copper, selenium, iron, manganese, molybdenym, zinc and mixtures thereof.

Among the vitamins one can range vitamin A, vitamin C, vitamin E and/or vitamin B12.

The amount of flavor depends upon the flavor or flavors selected, the flavor impression desired and the form of flavor used. If desired, coloring agents can also be added. Any soluble coloring agent approved for food use can be utilized for the current invention.

The current invention further relates to the confectionery product of the current invention and which is further comprising polydextrose.

The edible composition of the current invention is used for promoting the health and wellbeing of the consumer, by modulating the colonic ecosystem through promotion of health beneficial gut microbiota, such as bifidobacteria and lactobacilli.

Furthermore it relates to the confectionery product of the current invention wherein the confectionery product is a chocolate composition or chocolate drink.

Finally, the current invention relates to the use of confectionery product of current invention for promoting the the health and wellbeing of the consumer, and thus for promoting gut microbiota and/or for promoting the growth of lactic acid bacteria.. More specifically to the use wherein the confectionery product is a chocolate composition or chocolate drink.

## Claims

1. An edible composition comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100, a carbohydrate based polyol, and/or non-caloric high-intensity sweetener.

2. The composition according to claim 1 wherein the arabinoxylan-oligosaccharides and optionally xylo-oligosaccharides have a degree of polymerisation of from 2 to 50.

3. The composition according to claim 1 wherein the polyol is selected from the group consisting of erythritol, mannitol, isomalt, maltitol and mixtures of two or more thereof.

4. The composition according to claim 1 wherein the composition is further comprising polydextrose.

5. A confectionery product comprising a fiber containing material wherein the fiber containing material is arabinoxylan-oligosaccharides having an average degree of polymerisation of at least 2 to 100 and optionally xylo-oligosaccharides having an average degree of polymerisation of at least 2 to 100.

6. The confectionery product according to claim 4 further comprising a carbohydrate based polyol, and/or non-caloric high intensity sweetener.

7. The confectionery product according to claim 4 wherein the fiber containing material is present in an amount of from 2 to 95% based on dry matter content of confectionery product.

8. The confectionery product according to claim 4 wherein the fiber containing material is present in an amount of from 20 to 75% based on dry matter content of confectionery product.

9. The confectionery product according to claim 4 wherein the fiber containing material is present in an amount of from 30 to 60% based on dry matter content of confectionery product.

10. The confectionery product according to claim 5 further comprising polydextrose.

11. The confectionery product according to clam 5 wherein the confectionery product is a chocolate composition or chocolate drink.

12. Use of confectionery product according to claim 4 for promoting for promoting gut microbiota and/or for promoting the growth of lactic acid bacteria..

13. The use according to claim 12 wherein the confectionery product is a chocolate composition or chocolate drink.
